Europäisches Patentamt

European Patent Office

Office européen des brevets

(19)

(11) **EP 0 779 698 B1**

(12) **FASCICULE DE BREVET EUROPEEN**

(45) Date de publication et mention
de la délivrance du brevet:
**03.03.1999 Bulletin 1999/09**

(51) Int Cl.⁶: **H02K 33/18**, H02K 41/035

(21) Numéro de dépôt: **95420356.8**

(22) Date de dépôt: **11.12.1995**

(54) **Générateur multipolaire de vibrations électrodynamiques**

Mehrphasigen dynamoelektrischen Schwingungserreger

Multipolar dynamoelectric vibration generator

(84) Etats contractants désignés:
**DE FR GB IT NL SE**

(43) Date de publication de la demande:
**18.06.1997 Bulletin 1997/25**

(73) Titulaire: **METRAVIB R.D.S. Société Anonyme
69760 Limonest (FR)**

(72) Inventeurs:
• **Permuy, Alfred
F-92500 Rueil Malmaison (FR)**
• **Duperray, Bernard
F-01480 Ars (FR)**
• **Vernozy, Bernard
F-69620 Le Bois d'Oingt (FR)**

(74) Mandataire: **Thibault, Jean-Marc
Cabinet Beau de Loménie
51, Avenue Jean Jaurès
B.P. 7073
69301 Lyon Cédex 07 (FR)**

(56) Documents cités:
**WO-A-91/15051        WO-A-94/00906
US-A- 5 155 399**

• **PATENT ABSTRACTS OF JAPAN vol. 010, no.
370 (E-463) 10 Décembre 1986 & JP-A-61 164 459
(SHOWA ELECTRIC WIRE & CABLE CO LTD) 25
Juillet 1986**

EP 0 779 698 B1

## Description

La présente invention concerne le domaine technique des moyens conçus pour assurer la conversion d'une énergie électrique en une énergie mécanique par application de la loi de Laplace.

L'invention vise, plus précisément, les systèmes appelés habituellement générateurs de vibrations conçus pour convertir un courant électrique variable dit de pilotage, en efforts et déplacements variables pouvant être qualifiés de vibratoires.

Les générateurs de vibrations trouvent une première application avantageuse relevant de l'analyse vibratoire et visant la mesure de caractéristiques dynamiques d'un matériau, d'une structure, d'un système ou d'un capteur par exemple.

Il s'avère, également, particulièrement avantageux d'utiliser les générateurs de vibrations dans le domaine de l'application de vibrations antagonistes à des vibrations présentées par un objet ou un système en fonctionnement, de façon à réduire l'impact des vibrations dans leur environnement. D'une manière plus précise, les générateurs de vibrations peuvent ainsi être utilisés par exemple pour le contrôle actif des vibrations transmises par le groupe motopropulseur des véhicules, de façon à réduire notamment le bruit dans l'habitacle, ou à bord d'un navire pour lui permettre de rester silencieux, à savoir furtif.

D'une manière connue, un générateur de vibrations électrodynamiques comporte un aimant associé à une pièce polaire statique délimitant un entrefer à l'intérieur duquel une bobine se déplace en translation. La bobine, qui est placée dans le champ d'induction magnétique créé par l'aimant, est parcourue par un courant de commande, de sorte que la bobine est soumise à une force dite de Laplace entraînant son déplacement. Des générateurs existent dans une très large gamme de forces d'excitation vibratoires (de quelques Newtons à plus de 100 KN), mais au prix de masses d'encombrements et de coûts de réalisation très élevés.

Les générateurs habituels sont dimensionnés de manière à obtenir des accélérations élevées, c'est-à-dire que la masse des éléments mobiles (bobine, support de bobine) ou partiellement mobiles (ressort de guidage et de rappel vers la position d'équilibre) est minimisée. Or, il s'avère que dans beaucoup d'applications, ces générateurs sont associés à des structures de masse très importante (plusieurs dizaines de kg).

Dans ce cas, les générateurs de structure habituelle présentent une très forte inductance de la bobine, une masse et un encombrement importants des pièces polaires et une fragilité particulière du dispositif élastique de guidage et de rappel de la bobine, le plus souvent constitué de lames ajourées. Par ailleurs, le champ magnétique secondaire créé par la bobine est susceptible d'entraîner la démagnétisation de l'aimant.

Par ailleurs, il est connu dans l'état de la technique, notamment par le document **JP-A-61 164 459**, un générateur électrodynamique comportant une pièce polaire statique placée à distance et en vis-à-vis d'une pièce polaire mobile équipée de deux aimants montés l'un à côté de l'autre en créant un champ d'induction magnétique s'établissant entre les deux pièces polaires et présentant entre-eux un sens contraire. La pièce polaire statique est pourvue de deux bobines montées l'une à côté de l'autre en étant placées chacune dans un champ magnétique de sens différent, de manière à obtenir la création d'une force adaptée pour déplacer la pièce polaire mobile.

Si un tel générateur présente un principe de fonctionnement donnant satisfaction, il s'avère que sa mise en oeuvre pratique présente un certain nombre d'inconvénients. Il apparaît, en effet, qu'un tel générateur présente un rendement électromagnétique relativement faible. De plus, un tel générateur n'est pas équipé d'un dispositif de guidage relatif des pièces polaires présentant des performances suffisantes pour les applications visées.

L'objet de l'invention vise donc à remédier aux inconvénients des dispositifs connus en proposant un générateur de vibrations électrodynamiques conçu pour posséder des performances électromagnétiques élevées.

L'objet de la présente invention vise également à proposer un générateur de vibrations électrodynamiques conçu pour réduire, de façon importante, la masse des pièces polaires par rapport aux solutions existantes, et ce, pour une puissance équivalente.

L'objet de l'invention vise également à offrir un générateur de vibrations électromagnétiques adapté pour diminuer de façon importante les pertes de rendement et pour minimiser le champ démagnétisant susceptible de dégrader irréversiblement les aimants lors d'utilisations extrêmes avec des courants électriques excessifs.

Un autre objet de l'invention est également de proposer un générateur de vibrations électromagnétiques conçu pour assurer une meilleure rigidité des bobines et simplifier leur guidage.

Un objet encore de l'invention est d'offrir un générateur présentant une robustesse adaptée pour divers types d'applications.

Pour atteindre les divers objectifs ci-dessus, le générateur multipolaire de vibrations électrodynamiques selon l'invention, est du type comportant au moins un système élémentaire multipolaire comprenant :

- une pièce polaire statique,
- une pièce polaire mobile placée à distance et en vis-à-vis de la pièce polaire statique,
- au moins deux moyens créant chacun un champ d'induction magnétique s'établissant entre les deux pièces polaires et présentant entre-eux un sens contraire, lesdits moyens étant montés l'un à côté de l'autre sur l'une des pièces polaires,
- et au moins deux bobines montées l'une à côté de l'autre sur l'autre pièce polaire en étant placées chacune dans un champ d'induction magnétique différent, les bobines étant parcourues par des courants de sens contraire, de manière à obtenir la création d'une force adaptée pour déplacer la pièce polaire mobile dans une direction considérée.

Selon l'invention, chaque aimant possède un volume de matériau sensiblement égal au volume du matériau constitutif de la bobine associée, et la pièce polaire portant les bobines est aménagée pour présenter une lumière s'étendant sur la longueur de chacune des bobines, de façon à éviter la création d'une force antagoniste.

La description ci-dessous fait référence aux dessins annexés qui montrent, à titre d'exemples non limitatifs, des formes de réalisation et de mise en oeuvre de l'objet de l'invention.

La **fig. 1** est une coupe en élévation illustrant le principe de fonctionnement d'un générateur multipolaire de vibrations électrodynamiques.

La **fig. 2** est une vue en coupe longitudinale d'un exemple de réalisation d'un générateur multipolaire conforme à l'invention.

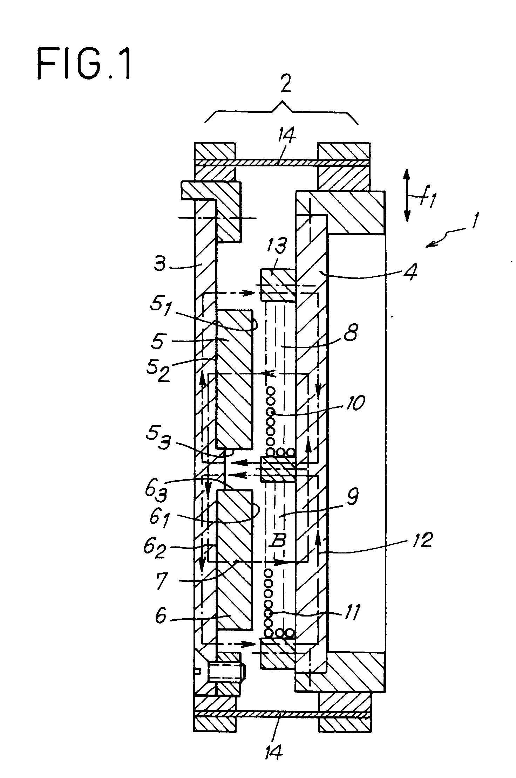

Le générateur **1** de vibrations électrodynamiques, tel qu'illustré à la **fig. 1**, est du type multipolaire et, plus précisément, bipolaire. Le générateur **1** comporte, en effet, un système élémentaire multipolaire **2** comprenant une pièce polaire statique **3** montée à distance et en vis-à-vis d'une pièce polaire mobile **4** guidée en translation rectiligne par tous moyens appropriés qui seront décrits plus précisément dans la suite de la description. Le système multipolaire **2** comporte, également, au moins deux moyens **5, 6** créant chacun un champ d'induction magnétique $\vec{\mathbf{B}}$ s'établissant entre les deux pièces polaires **3, 4** et présentant entre eux une polarité opposée ou un sens contraire.

Dans l'exemple illustré, les moyens **5, 6** sont constitués par des aimants. Bien entendu, il pourrait être envisagé de réaliser les moyens **5, 6** de production du champ d'induction par l'intermédiaire d'électroaimants. Les aimants **5, 6** sont montés sur l'une des pièces polaires, à savoir la pièce polaire fixe **3** dans l'exemple illustré. Les aimants **5, 6** sont portés par la pièce polaire fixe **3** en étant situés l'un à côté de l'autre et en offrant chacun, une face principale **5₁, 6₁** tournée vers la pièce polaire mobile **4** et une face principale opposée **5₂, 6₂** accolée à la pièce polaire statique **3**. Chaque face **5₁, 6₁** des aimants délimite ainsi un entrefer avec la pièce polaire mobile **4** placée en vis-à-vis. Par exemple, les faces **5₁, 5₂** de l'aimant **5** sont polarisées respectivement Sud-Nord, tandis que les faces **6₁, 6₂** de l'aimant **6** sont polarisées respectivement Nord-Sud. Les aimants **5, 6** sont ainsi montés tête-bêche pour offrir des polarités alternées. Il s'ensuit que le flux des aimants se referme localement par proximité, de sorte que des lignes de flux statique s'établissent entre les pièces polaires **3, 4** à partir des aimants, en formant ainsi un circuit magnétique statique **7** commun aux deux aimants.

Selon une caractéristique avantageuse, les aimants **5, 6** sont écartés l'un de l'autre, de manière que leurs bords voisins **5₃, 6₃** se trouvent distants l'un de l'autre, d'une mesure appropriée pour éviter que les lignes de champ se rebouclent d'un aimant sur l'autre. A titre d'exemple, l'écart entre les bords voisins des aimants est supérieur ou égal à l'épaisseur des aimants.

Dans une variante préférée de réalisation, il peut être prévu de monter sur chacune des faces principales **5₁, 6₁** des aimants, une plaque polaire non représentée, de forte perméabilité, par exemple réalisée en un matériau ferromagnétique doux, de sorte que par continuité à l'interface, les lignes de champ, qui sortent des plaques polaires, présentent une direction perpendiculaire à la face active des plaques. La mise en oeuvre de ces plaques polaires permet de limiter la perte des lignes de champ par effet de bord, dans la mesure où les lignes de champ sont redressées et canalisées entre les pièces polaires.

Le système élémentaire multipolaire **2** comporte, également, au moins deux bobines **8, 9** montées sur l'autre pièce polaire, à savoir celle mobile **4** dans l'exemple illustré. Les bobines **8, 9**, dont seulement quelques brins conducteurs **10, 11** sont dessinés sur la **fig. 1**, sont montées l'une à côté de l'autre, pour constituer deux couples d'aimants-bobines **5, 8** et **6, 9**. Chaque bobine **8, 9** est placée dans l'entrefer d'un aimant respectivement **5, 6**, en ayant leurs brins conducteurs **10, 11** placés selon une direction perpendiculaire à celle du champ d'induction magnétique $\vec{\mathbf{B}}$.

Selon une caractéristique avantageuse de l'invention, les bobines **8, 9** sont parcourues par des courants de sens contraire, de manière à obtenir, en combinaison avec le champ d'induction magnétique $\vec{\mathbf{B}}$, la création d'une force dite de Laplace adaptée pour déplacer les bobines **8, 9** et, par suite, la pièce polaire mobile **4** dans la direction **f₁**. Sur le dessin de la **fig. 1**, le courant circulant dans la bobine **8** est dirigé de façon à rentrer dans le plan de la feuille, tandis que le courant circulant dans la bobine **9** est dirigé de façon à sortir du plan de la feuille. Bien entendu, il peut être envisagé d'obtenir le même effet en réalisant des bobinages de sens inversé pour les deux bobines alimentées par un courant de même sens.

La répétition des pôles aimant/bobine présente l'avantage, à induction égale, de diviser la section des pièces polaires par le nombre de pôles, le flux des aimants se refermant localement par proximité. Il apparaît ainsi une diminution importante de la masse des pièces polaires pour la même puissance, car les flux magnétiques étant divisés ou fractionnés par le nombre de pôles, les sections des pièces polaires requises pour guider et fermer les lignes de champ sont réduites d'autant, tout en assurant les mêmes densités de flux magnétique suffisamment basses pour éviter le risque de saturation du circuit magnétique.

Par ailleurs, le champ magnétique créé par la bobine est faible car les bobinages sont fractionnés et parce que le champ magnétique créé par les bobines ne traverse pas les aimants dans le sens de sa magnétisation. En effet, les lignes de flux dynamiques, représentées par le repère **12** sur la **fig. 1**, s'établissent de part et d'autre de chacun des couples bobine-aimant, en se refermant dans les pièces polaires **3, 4**. De plus, il est à noter que les flux créés par chaque bobine successivement s'annulent mutuellement, à l'exception, toutefois, des flux de fuite non compensés apparaissant dans les entrefers. Il s'ensuit une réduction importante de self-inductance.

Selon une variante de réalisation préférée, les bobines **8, 9** sont montées entre des éléments conducteurs non ferro-magnétiques **13** s'étendant à partir de la pièce polaire mobile **4**, en saillie pour venir s'établir sensiblement jusqu'au plan contenant l'enveloppe extérieure des bobines. Les éléments conducteurs **13** sont destinés à diminuer encore l'inductance haute fréquence des bobines en bloquant le flux par effet de peau.

Selon une autre caractéristique de l'invention, l'aimant **5, 6** et la bobine **8, 9** associée possèdent des surfaces en regard, dont les dimensions sont sensiblement identiques. De préférence, la mesure de la bobine prise dans la direction de déplacement $f_1$ est légèrement supérieure à celle de l'aimant associé, de façon que toute la face $5_1, 6_1$ d'un aimant se trouve en vis-à-vis de la bobine correspondante, même lorsque la pièce polaire mobile **4** se trouve dans des positions extrêmes de déplacement.

Il est à noter que pour obtenir un dimensionnement optimal du système, il convient de diminuer les pertes par effet Joule. Il s'ensuit que le volume d'un aimant doit être égal au volume de matériau constitutif de la bobine associée. Dans la mesure où les surfaces en regard, pour chaque couple bobine-aimant, sont sensiblement identiques, l'épaisseur de l'aimant est sensiblement égale à celle de la bobine.

Selon une variante préférée de réalisation, la pièce polaire mobile **4** est guidée par rapport à la pièce polaire statique **3** par l'intermédiaire de lames de guidage **14**. Chaque lame de guidage **14**, qui est réalisée en métal ou en matériau composite, est fixée par tous moyens appropriés entre l'extrémité de la pièce polaire statique **3** et l'extrémité associée de la pièce polaire mobile **4**. La géométrie de ces lames est déterminée de façon que leur raideur, pour des déplacements relatifs des pièces **3, 4** dans le plan orthogonal à la direction de déplacement $f_1$, est très grande devant la raideur pour les déplacement relatifs des pièces **3, 4** selon l'axe de déplacement du générateur représenté par la direction $f_1$. Par exemple, le rapport entre les raideurs selon la direction de déplacement $f_1$ des pièces polaires et selon une direction perpendiculaire est inférieur à 1/100. Il est ainsi obtenu un excellent guidage de déplacement entre les pièces **3, 4**, et la raideur de translation entre les pièces **3, 4** est ajustable par un choix adapté du matériau constitutif et des dimensions des lames. De plus, il peut être obtenu des déplacements longitudinaux selon la direction $f_1$ d'une relative grande amplitude. Il est à noter que pour limiter la fatigue mécanique de ces lames lors du fonctionnement du générateur, il est intéressant de réaliser ces lames avec la plus grande longueur possible compatible avec la distance entre les pièces polaires.

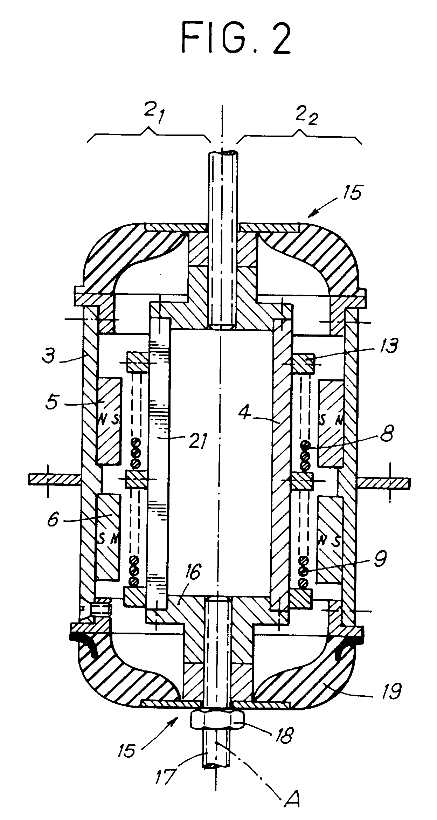

La **fig. 2** illustre un exemple de réalisation d'un générateur de vibrations électrodynamiques **1** présentant une forme de révolution et comportant ainsi deux systèmes élémentaires bipolaires $2_1, 2_2$. Chaque système élémentaire $2_1, 2_2$ est ainsi défini de part et d'autre d'un plan de symétrie longitudinal passant par l'axe de révolution **A** du générateur. Selon cette variante de réalisation préférée, la pièce polaire statique **3** est réalisée sous la forme d'un tube externe, à l'intérieur duquel est montée, de manière concentrique, la pièce polaire mobile **4** constituée par un cylindre ou un tube interne. Le tube interne **4** est guidé en déplacement, à chacune de ses extrémités, à l'aide d'un système de liaison élastique **15**. Chaque système **15** est constitué, par exemple, par un flasque **16** fixé sur une extrémité du tube interne **4** et montée fixement par l'intermédiaire d'une tige **17** et d'un écrou **18**, sur un plot élastique **19** supporté par le tube externe **3**. Il est à noter que le générateur illustré à la **fig. 2** peut être avantageusement équipé d'un système de guidage du type à lames **14**, tel que décrit en relation de la **fig. 1**.

Les aimants **5** et **6** sont réalisés sous une forme annulaire en étant fixés sur la face interne du tube **3**. Dans le même sens, les brins conducteurs des bobines **8, 9** sont enroulés autour du tube interne **4**, de manière que la polarité de chacune des bobines **8, 9** se trouve inversée de part et d'autre du plan de révolution de l'ensemble, soit par câblage, soit à l'aide du sens du courant.

Dans cette variante de réalisation, les éléments conducteurs non ferro-magnétiques **13** sont constitués par des bagues réalisées, par exemple, en laiton et fixées sur le tube interne **4** pour venir s'établir à chacune des extrémités des bobines **8, 9**.

Selon une autre caractéristique avantageuse, le tube interne **4** est aménagé pour comporter une ou plusieurs lumières **21** s'étendant sur au moins toute la longueur de chacune des bobines **8, 9**, de façon à éviter la création d'une force antagoniste augmentant ainsi le rendement électromagnétique global d'un tel générateur.

L'invention n'est pas limitée aux exemples décrits et représentés, car diverses modifications peuvent y être apportées sans sortir de son cadre. A cet effet, il doit être noté qu'il peut être prévu de réaliser un générateur de vibrations électrodynamiques dont le système élémentaire multipolaire comporte un nombre de pôles ou de couples aimant-bobine supérieur à deux. Il peut ainsi être envisagé de placer successivement côte à côte, selon le principe défini ci-dessus, un nombre plus important de couples aimant-bobine en fonction de l'application visée. Dans le même sens, il doit être considéré qu'il peut être intéressant, dans certaines applications de réalisation, un générateur de vibrations électrodynamiques comportant un nombre de systèmes élémentaires multipolaires supérieur à deux. Par exemple, il peut être prévu de monter, à l'intérieur du tube interne **4** ou à l'extérieur du tube externe **3**, un ou plusieurs systèmes élémentaires multipolaires conformes à l'invention. De même, il est à noter que la position des bobines et des aimants peut être intervertie, de sorte que les bobines se trouvent fixées sur la pièce polaire fixe **3**, tandis que les aimants sont portés par la pièce polaire mobile **4**. Dans le même sens, les caractères statique et mobile des pièces polaires **3, 4** peuvent être intervertis en conservant tous les autres éléments identiques par ailleurs, de sorte que les pièces polaires **3, 4** soient respectivement mobile et statique.

**Revendications**

1. Générateur multipolaire de vibrations électrodynamiques, du type comportant au moins un système élémentaire multipolaire (**2**) comprenant :

   - une pièce polaire statique (**3**),
   - une pièce polaire mobile (**4**) placée à distance et en vis-à-vis de la pièce polaire statique,
   - au moins deux moyens (**5, 6**) créant chacun un champ d'induction magnétique s'établissant entre les deux pièces polaires (**3, 4**) et présentant entre eux un sens contraire, lesdits moyens étant montés l'un à côté de l'autre sur l'une des pièces polaires,
   - et au moins deux bobines (**8, 9**) montées l'une à côté de l'autre sur l'autre pièce polaire en étant placées chacune dans un champ d'induction magnétique différent, les bobines (**8, 9**) étant parcourues par des courants de sens contraire, de manière à obtenir la création d'une force adaptée pour déplacer la pièce polaire mobile dans une direction considérée (**f$_1$**),

   caractérisé en ce que chaque aimant (**5, 6**) possède un volume de matériau sensiblement égal au volume du matériau constitutif de la bobine (**8, 9**) associée et en ce que la pièce polaire (**4**) portant les bobines (**8, 9**) est aménagée pour présenter une lumière (**21**) s'étendant sur la longueur de chacune des bobines, de façon à éviter la création d'une force antagoniste.

2. Générateur multipolaire selon la revendication 1, caractérisé en ce que les pièces polaires (**3, 4**) sont reliées, à chacune de leurs extrémités, par des lames de guidage présentant une raideur selon la direction de déplacement (**f$_1$**) de la pièce polaire, largement inférieure à la raideur considérée dans un plan perpendiculaire à la direction de déplacement.

3. Générateur multipolaire selon la revendication 1, caractérisé en ce que chaque lame de guidage possède un rapport entre les raideurs, selon la direction de déplacement (**f$_1$**) des pièces polaires et selon une direction perpendiculaire, inférieur à 1/100.

4. Générateur multipolaire selon la revendication 1, caractérisé en ce que les bobines (**8, 9**) sont montées entre des éléments conducteurs non ferro-magnétiques (**13**) s'étendant à partir de la pièce polaire permettant de limiter le champ magnétique créé par les bobines.

5. Générateur multipolaire selon la revendication 4, caractérisé en ce que les éléments conducteurs non ferro-magnétiques (**13**) s'étendent en saillie à partir de la pièce polaire, pour venir s'établir sensiblement jusqu'au plan contenant l'enveloppe extérieure des bobines.

6. Générateur multipolaire selon la revendication 1 ou 2, caractérisé en ce que chaque aimant (**5, 6**) et bobine (**8, 9**) associée possèdent des surfaces en regard de dimensions sensiblement identiques.

7. Générateur multipolaire selon la revendication 1, caractérisé en ce que les pièces polaires (**3, 4**) sont réalisées sous la forme d'un cylindre interne monté concentriquement à l'intérieur d'un tube externe, les moyens (**5, 6**) de création des champs d'induction et les bobines (**8, 9**) étant réalisés sous la forme d'anneaux montés entre les deux tubes polaires, de manière à constituer un double système élémentaire multipolaire.

8. Générateur multipolaire selon la revendication 6, caractérisé en ce qu'il comporte au moins un autre système élémentaire multipolaire placé à l'intérieur du tube polaire interne et/ou à l'extérieur du tube polaire externe.

**Patentansprüche**

1. Mehrphasiger dynamoelektrischer Schwingungserreger mit wenigstens einem mehrphasigen elementaren System (2), der umfaßt:

   - einen statischen Polschuh (3),
   - einen beweglichen Polschuh (4), der beabstandet von und gegenüber dem statischen Polschuh angeordnet ist,
   - wenigstens zwei Mittel (5, 6), die jeweils ein magnetisches Induktionsfeld zwischen den zwei Polschuhen (3, 4) mit entgegengesetzter Richtung zwischen ihnen erzeugen, wobei die Mittel nebeneinander auf einem der Polschuhe angeordnet sind,

- und wenigstens zwei Spulen (8, 9), die nebeneinander auf dem anderen Polschuh angeordnet sind und sich jeweils in einem unterschiedlichen magnetischen Induktionsfeld befinden, wobei die Spulen (8, 9) von Strömen in umgekehrter Richtung durchflossen werden, so daß die Erzeugung einer Kraft zum Bewegen des beweglichen Polschuhs in einer gewünschten Richtung ($f_1$) ermöglicht wird,

dadurch gekennzeichnet, daß jeder Magnet (5, 6) ein Volumen aus Material umfaßt, das im wesentlichen gleich dem Volumen aus Material ist, aus dem die dazugehörige Spule (8, 9) besteht, und daß der Polschuh (4), auf dem sich die Spulen (8, 9) befinden, so geformt ist, daß er eine Öffnung (21) aufweist, die sich über die Länge jeder der Spulen erstreckt, so daß die Erzeugung einer Gegenkraft vermieden wird.

2. Mehrphasiger Erreger nach Anspruch 1, dadurch gekennzeichnet, daß die Polschuhe (3, 4) an jedem ihrer Enden durch Führungsblätter verbunden sind, die eine Dicke in Richtung der Verschiebung ($f_1$) des Polschuhs haben, die wesentlich kleiner als die Dikke in einer Ebene senkrecht zu der Bewegungsrichtung ist.

3. Mehrphasiger Erreger nach Anspruch 1, dadurch gekennzeichnet, daß jedes Führungsblatt ein Verhältnis der Steifigkeit in Verschiebungsrichtung ($f_1$) von den Polschuhen und der in einer senkrechten Richtung hat, das kleiner als 1/100 ist.

4. Mehrphasiger Erreger nach Anspruch 1, dadurch gekennzeichnet, daß die Spulen (8, 9) zwischen den nichtferromagnetischen Leiterelementen (13) montiert sind, die sich ausgehend von dem Polschuh erstrecken, so daß die Beschränkung des durch die Spulen erzeugten Magnetfeldes möglich wird.

5. Mehrphasiger Erreger nach Anspruch 4, dadurch gekennzeichnet, daß die nichtferromagnetischen Leiterelemente (13) sich von dem Polschuh aus vorspringend erstrecken, im wesentlichen bis zu der Ebene, die die Außenhülle der Spulen enthält.

6. Mehrphasiger Erreger nach Anspruch 1 oder 2, dadurch gekennzeichnet, daß jeder Magnet (5, 6) und jede dazugehörige Spule (8, 9) gegenüberliegende Oberflächen mit im wesentlichen identischen Dimensionen haben.

7. Mehrphasiger Erreger nach Anspruch 1, dadurch gekennzeichnet, daß die Polschuhe (3, 4) die Form eines Innenzylinders, der konzentrisch in einem Außenrohr angeordnet ist, haben, wobei die Mittel (5, 6) zum Erzeugen von Induktionsfeldern und die Spulen (8, 9) in Ringform vorliegen, die zwischen den zwei Polrohren angeordnet sind, so daß sich ein doppeltes mehrphasiges elementares System ergibt.

8. Mehrphasiger Erreger nach Anspruch 6, dadurch gekennzeichnet, daß er wenigstens ein weiteres mehrphasiges elementares System in dem Polinnenrohr und/oder außen von dem Polaußenrohr umfaßt.

**Claims**

1. Multipole generator of electrodynamic vibrations, of the type comprising at least one multipole elementary system (2) comprising:

- a static pole piece (3),
- a movable pole piece (4) placed some distance from and facing the static pole piece,
- at least two means (5, 6) each creating a magnetic induction field set up between the two pole pieces (3, 4) and exhibiting mutually opposite directions, the said means being mounted one beside the other on one of the pole pieces,
- and at least two coils (8, 9) mounted one beside the other on the other pole piece while each being placed in a different magnetic induction field, the coils (8, 9) being traversed by oppositely directed currents, in such a way as to achieve the creation of a force suitable for displacing the movable pole piece in a relevant direction ($f_1$),

characterized in that each magnet (5, 6) possesses a volume of material substantially equal to the volume of the constituent material of the associated coil (8, 9) and in that the pole piece (4) carrying the coils (8, 9) is fashioned so as to have a porthole (21) running along the length of each of the coils, so as to avoid the creation of an antagonistic force.

2. Multipole generator according to Claim 1, characterized in that the pole pieces (3, 4) are linked, at each of their ends, by guide blades exhibiting a stiffness in the direction of displacement ($f_1$) of the pole piece, which is considerably less than the stiffness considered in a plane perpendicular to the direction of displacement.

3. Multipole generator according to Claim 1, characterized in that each guide blade possesses a ratio of less than 1/100 between the stiffnesses, in the direction of displacement ($f_1$) of the pole pieces and in a perpendicular direction.

4.   Multipole generator according to Claim 1, characterized in that the coils (8, 9) are mounted between non-ferromagnetic conducting elements (13) running from the pole piece making it possible to limit the magnetic field created by the coils.

5.   Multipole generator according to Claim 4, characterized in that the non-ferromagnetic conducting elements (13) project from the pole piece, so as to extend substantially up to the plane containing the outer envelope of the coils.

6.   Multipole generator according to Claim 1 or 2, characterized in that each magnet (5, 6) and associated coil (8, 9) possess facing surfaces of substantially identical dimensions.

7.   Multipole generator according to Claim 1, characterized in that the pole pieces (3, 4) are made in the form of an internal cylinder mounted concentrically inside an external tube, the means (5, 6) for creating the induction fields and the coils (8, 9) being made in the form of annuli mounted between the two pole tubes, in such a way as to constitute a double multipole elementary system.

8.   Multipole generator according to Claim 6, characterized in that it includes at least one other multipole elementary system placed inside the internal pole tube and/or outside the external pole tube.

# FIG.1

# FIG. 2